# FASCICULE DE BREVET EUROPEEN

(11) **EP 3 775 500 B1**
(45) Date de publication et mention de la délivrance du brevet: **29.12.2021**
(21) Numéro de dépôt: 19716972.5
(22) Date de dépôt: 20.03.2019
(51) Int. Cl.: F01D 21/02, F01D 5/06

(54) **ARBRE DE TURBINE D'UNE TURBOMACHINE ET PROCÉDÉ DE PROTECTION CONTRE UNE SURVITESSE DUDIT ARBRE**
TURBINENWELLE EINER TURBOMASCHINE UND VERFAHREN ZUM SCHUTZ VOR ÜBERHÖHTER DREHZAHL DIESER WELLE
TURBINE SHAFT OF A TURBOMACHINE AND METHOD FOR OVERSPEED PROTECTION OF THE SHAFT

(30) Priorité: 27.03.2018 FR 1852616
(43) Date de publication de la demande: 17.02.2021
(73) Titulaire: SAFRAN AIRCRAFT ENGINES, 75015 Paris (FR)
(72) Inventeur: TRAPPIER, Nicolas, Xavier, 77550 MOISSY-CRAMAYEL (FR); GUILLOU, Pierrot, 77550 MOISSY-CRAMAYEL (FR); FRANTZ, Caroline, Marie, 77550 MOISSY-CRAMAYEL (FR)
(74) Mandataire: Gevers & Orès
(86) Numéro de dépôt international: PCT/FR2019/050631
(87) Numéro de publication internationale: WO 2019/186028

(56) Documents cités:
- EP-A1- 1 640 564
- EP-A1- 3 296 525
- FR-A1- 2 752 024
- FR-A1- 3 022 890

## Description

### Domaine technique

La présente invention concerne un arbre de turbine d'une turbomachine, ainsi qu'un procédé de protection contre une survitesse dudit arbre de turbine.

### Etat de la technique

L'état de la technique comporte notamment les documents EP-A1-3 296 525, FR-A1-2 752 024 et FR-A1-3 022 890.

De manière classique, une turbomachine d'aéronef, par exemple un turboréacteur, comporte d'amont en aval dans le sens de l'écoulement des gaz, une soufflante, un ou plusieurs compresseurs disposés en série, par exemple un compresseur basse pression et un compresseur haute pression, une chambre de combustion, une ou plusieurs turbines, par exemple une turbine basse pression et une turbine haute pression, et une tuyère.

La soufflante génère un flux d'air dont une partie alimente les organes de la turbomachine précités et forme un flux primaire dans une veine primaire, et une autre partie s'écoule dans une veine secondaire qui s'étend autour de la veine primaire et forme un flux d'air secondaire, qui génère une majeure partie de la poussée de la turbomachine. Un compresseur est configuré pour accroître la pression de l'air, qui est ensuite fourni à la chambre de combustion. Dans la chambre de combustion, de l'air est mélangé à un carburant et brûlé. Les gaz de combustion traversent ensuite une turbine, qui assure l'entraînement en rotation d'un compresseur en prélevant une partie de l'énergie de pression des gaz sortant de la chambre de combustion et en la transformant en énergie mécanique. La tuyère permet d'éjecter des gaz d'échappement pour produire également une force de propulsion de la turbomachine.

Dans certaines architectures de turbomachine un réducteur est intégré entre la turbine basse pression et la soufflante, pour permettre un fonctionnement de la turbine et de la soufflante à des régimes différents, la turbine ayant une vitesse de rotation supérieure à celle de la soufflante.

En particulier, le rotor de la turbine basse pression est accouplé à la soufflante par l'intermédiaire du réducteur, d'un arbre qui relie le rotor de la turbine basse pression au réducteur et d'un arbre qui relie le réducteur à la soufflante. La position axiale d'un arbre est notamment déterminée par un palier de butée assurant le maintien de l'arbre dans le sens axial et éviter tout déplacement de long de son axe, et par son accouplement au réducteur.

Des analyses de sûreté de fonctionnement (également appelées FHA de l'anglais « Functional Hazard Analysis ») d'une turbomachine ont établi les causes pouvant mener à des évènements ayant pour conséquence des conditions catastrophiques pour l'avion, tel que la projection de débris à haute énergie (également appelée UHED de l'anglais « Uncontained High Energy Débris »).

Un premier évènement pouvant entrainer l'éclatement d'un disque de turbine, et donc pouvant entrainer une libération de débris à haute énergie, est un échauffement au sein de la turbomachine, qui peut dégrader les caractéristiques mécaniques des organes de la turbomachine.

Un deuxième évènement pouvant entrainer l'éclatement d'un disque de turbine est une augmentation du régime de fonctionnement de la turbomachine, qui peut générer une augmentation des contraintes dans le disque de turbine. Une augmentation du régime de fonctionnement de la turbomachine peut se traduire par une survitesse d'un rotor de turbine, qui est en principe un phénomène rarissime et que l'on cherche à éviter.

Une première cause de ce deuxième évènement peut être une rupture d'un arbre de transmission entre une turbine et un compresseur ou la soufflante, en amont ou en aval d'une butée axiale de l'arbre de transmission.

Par exemple, le phénomène de survitesse peut se produire lorsque l'arbre qui relie le rotor de la turbine basse pression au réducteur ou l'arbre qui relie le réducteur à la soufflante se rompt, ou lorsqu'un organe interne au réducteur se rompt. A la rupture d'un de ces arbres ou de l'organe interne du réducteur, le rotor de la turbine se retrouve par conséquent désaccouplé mécaniquement de la soufflante, qui n'exerce alors plus de couple résistif sur cet arbre et qui par conséquent ne limite plus sa vitesse de rotation.

Toutefois, les aubes mobiles agencées sur le rotor de la turbine continuent d'être entraînées en rotation par les gaz sortant de la chambre de combustion de la turbomachine. La turbine passe alors en survitesse, ce qui soumet le rotor de turbine à des forces centrifuges excessives qui sont susceptibles de provoquer son éclatement, avec pour conséquence des risques de perforation du carter externe de la turbine, mais aussi de la carlingue de l'aéronef. La survitesse est donc un phénomène risqué pour la turbomachine et les passagers de l'aéronef, il est donc souhaitable de prévoir les conséquences d'un tel phénomène.

Dans ce type d'architecture, en cas de survitesse du rotor de turbine, l'intégrité de la partie rotor en aval du palier de butée de l'arbre de transmission n'est pas assurée.

Une deuxième cause de ce deuxième évènement peut être une pleine ouverture, c'est-à-dire à une mise en butée mécanique, d'une vanne de dosage de débit du carburant (souvent désignées par l'acronyme FMV de l'anglais « Fuel Metering Valve ») de la turbomachine.

Une troisième cause de ce deuxième évènement peut être une sur-fermeture des aubes de stator à angle de calage variable (souvent désignées par l'acronyme VSV de l'anglais « Variable Stator Vanes ») qui contrôlent le flux d'air qui circule dans un compresseur.

Selon la cause du deuxième événement, son impact sera plus ou moins important selon le rotor de la turbomachine. Par exemple, le rotor de la turbine basse pression est plus sensible à la rupture de l'arbre de transmission, qui mène à une perte du couple résistif de la soufflante, qu'à une fermeture des VSV du compresseur basse pression.

La limitation de survitesse est donc une contrainte impérative à respecter dans les turbomachines.

La première cause de ce deuxième événement, c'est-à-dire la rupture de l'arbre de transmission, amène au cas le plus critique en survitesse du rotor de la turbine.

Des solutions de protection d'une survitesse dans une turbomachine ont déjà été mises en place.

En cas de rupture de l'arbre en aval du palier de butée, on a ainsi proposé une solution technique consistant, au sein d'un même étage d'une turbine, à pourvoir des aubes d'un aubage du stator avec une zone en forme de déviation axiale de la forme desdites aubes appelée « bombé ». La rupture de l'arbre en aval du palier de butée a pour conséquence un déplacement du rotor de la turbine, sous l'action de la pression des gaz sur les aubes du rotor, en direction du stator de la turbine, puisque la turbine n'est plus connectée au palier de butée. Lorsqu'il recule lors de la rupture de l'arbre de la turbine, un aubage du rotor de turbine voit les aubes mobiles de son aubage entrer en contact avec la zone de bombé des aubes du stator. Les pales des aubes mobiles sont ainsi détruites, ce qui permet ainsi de ralentir la rotation du rotor de la turbine. Cette opération de destruction est, pour cette raison, connue sous le nom de « plumage » de la turbine.

Cette solution présente l'inconvénient de ne pas permettre une définition la plus aérodynamique possible des aubes de stator, du fait de la présence des zones de bombé sur ces aubes.

Par ailleurs, cette solution permet d'arrêter la turbine qu'en cas de déplacement axial de l'arbre de turbine survenant en cas de rupture de cet arbre, mais pas en cas de rupture de l'arbre de soufflante ou de rupture d'un organe interne du réducteur, car ces types de rupture ne provoquent pas de déplacement axial de l'arbre de turbine. Or ce type de rupture est néanmoins dangereux car il est susceptible de provoquer une survitesse du rotor de turbine.

En cas de rupture de l'arbre en amont du palier de butée, le rotor de la turbine ne recule pas et accélère fortement.

On a ainsi proposé d'interrompre l'arrivée du carburant alimentant la chambre de combustion afin d'éliminer la source d'énergie par laquelle le rotor est accéléré. Plus précisément, un capteur a été intégré à l'arrière du moteur permettant de détecter si la valeur de la survitesse de la turbomachine dépasse une valeur seuil, et en conséquence de déclencher la coupure de l'alimentation en carburant de la chambre de combustion.

Cependant, pour cette solution technique, il est nécessaire de prendre en compte un temps de détection qui permet de vérifier que la valeur de la survitesse dépasse la valeur seuil, puis un temps de coupure du carburant.

De plus, le dispositif de coupure d'alimentation ne permet pas à lui seul de ralentir rapidement le rotor de la turbine, ce qui nuit à son efficacité.

En outre, l'arrêt ou le ralentissement du rotor ne dépend que du dispositif de coupure d'alimentation. Ceci est particulièrement pénalisant dans le cas des petits moteurs, dont l'inertie plus faible du rotor de turbine induit un risque de départ en survitesse plus rapide, et pour lesquels l'éclatement des disques de turbine peut survenir avant même que la coupure d'alimentation en carburant n'ait pu suffisamment ralentir le rotor.

On a également proposé une solution technique consistant à combiner la zone de bombé des aubes du stator et l'utilisation d'un capteur permettant de détecter si la valeur de la survitesse de la turbomachine dépasse une valeur seuil. Lorsque l'arbre se rompt entre un palier de butée, par exemple un palier à billes agencé en aval du réducteur, et la turbine basse pression, le bombé des aubes du stator permet d'avoir un niveau de survitesse peu élevé, car le rotor de la turbine basse pression recule. Lorsque l'arbre se rompt entre le palier de butée et un autre palier, par exemple un palier à rouleaux agencé entre la soufflante et le réducteur, le rotor de la turbine ne recule pas. En effet, le palier de butée permettant de maintenir l'arbre dans le sens axial et d'éviter tout déplacement de l'arbre le long de son axe, il empêche ainsi le recul du rotor de la turbine. De ce fait, le bombé des aubes du stator n'est pas efficace, le capteur permet donc de détecter si la valeur de la survitesse de la turbomachine dépasse une valeur seuil, et en conséquence de déclencher la coupure de l'alimentation en carburant de la chambre de combustion. Le niveau de survitesse atteint est faible, car les inerties de l'arbre et du compresseur basse pression s'additionnent à l'inertie de la turbine basse pression, et le compresseur basse pression permet de ne pas considérer que tout le couple est relâché.

On a proposé, dans la demande FR-A1-2 907 840, un dispositif de limitation de survitesse de l'arbre de la turbine comprenant des moyens de cisaillement des aubes mobiles d'un étage de turbine comportant des moyens de projection d'une goupille sur le trajet des aubes mobiles, de sorte à provoquer l'éclatement des aubes à l'étage de turbine lorsqu'une rupture de l'arbre est détectée.

On a également proposé, dans la demande FR-A1-3 049 646, un dispositif de limitation de survitesse de l'arbre de la turbine comprenant des moyens de destruction des aubes mobiles d'un étage de turbine comportant des moyens de projection d'un projectile sur le trajet des aubes mobiles, de sorte à provoquer la destruction de l'étage de turbine lorsqu'une survitesse est détectée.

On a également proposé, dans la demande FR-A1-2 916 483, un dispositif de freinage permettant, en cas de rupture d'un arbre, d'obtenir l'arrêt du rotor rapidement. Selon cette solution technique, le dispositif de freinage comprend un élément de coupe, solidaire par exemple du rotor, et un élément en forme d'anneau, solidaire par exemple du stator. Les éléments sont configurés pour venir en contact par déplacement axial du rotor après rupture de l'arbre, l'élément de coupe découpant l'élément en forme d'anneau.

On a également proposé, dans la demande EP-A1-1 640 564, des moyens assurant le freinage du rotor de la turbine en cas de rupture de l'arbre de la turbine afin d'en obtenir l'arrêt rapidement. Selon cette solution technique, des moyens de destruction sont agencés pour cisailler les aubes d'un disque amont du rotor au début d'un déplacement vers l'aval du rotor résultant de la rupture de l'arbre.

L'invention a notamment pour but d'apporter une solution simple, économique et efficace pour permettre l'arrêt d'un rotor en cas de survitesse.

### Exposé de l'invention

A cet effet, l'invention concerne un arbre de turbine d'une turbomachine s'étendant selon un axe longitudinal, comprenant une portion tubulaire principale de longueur L1 et ayant un diamètre principal externe maximal donné, comprenant un tronçon tubulaire secondaire de longueur L2 et ayant un diamètre secondaire externe maximal supérieur au diamètre principal externe maximal, le tronçon tubulaire secondaire s'étendant radialement en saillie de l'arbre de sorte que la portion tubulaire principale s'étend de part et d'autre du tronçon tubulaire secondaire selon l'axe longitudinal, le tronçon tubulaire secondaire comprenant une section fusible configurée pour rompre l'arbre en deux parties distinctes lorsque la valeur d'une contrainte tangentielle appliquée sur l'arbre dépasse une valeur seuil prédéterminée.

Avantageusement, la section fusible est configurée pour être la seule à rompre l'arbre en deux parties distinctes lorsque la valeur d'une contrainte tangentielle appliquée sur l'arbre dépasse une valeur seuil prédéterminée.

Avantageusement, la section fusible agencée sur le tronçon tubulaire secondaire de l'arbre permet d'avoir la contrainte tangentielle qui génère la rupture de la section fusible. En effet, comme le tronçon tubulaire secondaire a un diamètre secondaire supérieur au diamètre principal de la portion tubulaire principale, c'est la contrainte tangentielle qui génère la rupture de la section fusible, et non pas une contrainte de torsion due au couple.

De plus, la section fusible de l'arbre de turbine selon l'invention permet, en cas de départ en survitesse résultant de la rupture dudit arbre en aval d'un palier de butée, de faire reculer le rotor de la turbine.

Ainsi, la section fusible permet d'assurer que tous les cas de rupture de l'arbre amènent à avoir un recul de la turbine, et non pas uniquement les cas de rupture de l'arbre en aval du palier de butée, comme dans l'état de la technique.

Le recul du rotor de turbine permet de venir casser les aubes du rotor, par exemple via un bombé des aubes de stator, et par conséquent de ralentir ledit rotor.

En outre, la section fusible permet de réduire le besoin en performance des systèmes de protection électronique utilisés dans l'art antérieur. En effet, comme la section fusible permet d'assurer que tous les cas de rupture de l'arbre amènent à avoir un recul du rotor de la turbine, et donc un plumage des aubes du rotor, ces systèmes ne sont plus destinés qu'à protéger la turbomachine des cas de pleine ouverture de la FMV et de fermeture des VSV.

De plus, un tel arbre de turbine permet un dimensionnement optimisé de la turbine, ce qui permet de réduire la vitesse atteinte par le rotor de la turbine après la rupture de l'arbre, et ainsi d'avoir un dimensionnement optimal des disques de turbine, ce qui permet finalement de réduire la masse et l'encombrement de la turbine.

Le diamètre secondaire externe maximal peut être au moins 1,8 fois supérieur au diamètre principal externe maximal.

De préférence, la section fusible comprend une portion amincie dont le diamètre interne maximal est supérieur à un diamètre secondaire interne minimal dudit tronçon tubulaire secondaire, et dont le diamètre externe maximal est égal au diamètre secondaire externe maximal.

La portion amincie peut s'étendre sur au plus 80 % de la longueur L2.

De façon avantageuse, la portion amincie s'étendant sur au plus 80 % de la longueur L2 permet de concentrer toutes les contraintes tangentielles sur la portion amincie, tout en permettant d'avoir une section fusible sur ledit tronçon tubulaire secondaire destinée à se rompre lorsque la valeur de la contrainte tangentielle appliquée sur l'arbre dépasse une valeur seuil prédéterminée.

La longueur L2 est supérieure à 0,3 fois le diamètre externe maximal de la portion amincie afin d'éviter de transmettre les contraintes tangentielles au reste de l'arbre.

La portion amincie peut comprendre au moins une ou une pluralité de dents qui s'étendent radialement en saillie de la portion amincie. La pluralité de dents peut être régulièrement répartie sur la portion amincie.

De préférence, au moins un orifice traversant est formé dans le tronçon tubulaire secondaire.

De façon avantageuse, l'orifice traversant permet d'optimiser la section fusible en décorrélant les contraintes de torsion et tangentielle. De plus, l'orifice traversant permet avantageusement une évacuation de l'huile ayant pu s'accumuler en cas de fuite dans une enceinte lubrifiée s'étendant autour de l'arbre.

La section fusible peut être formée sur au moins un secteur angulaire du tronçon tubulaire secondaire.

L'invention concerne également une turbomachine, en particulier d'aéronef, comprenant une turbine comportant un arbre de turbine selon l'invention, le tronçon tubulaire secondaire étant agencé en aval d'un palier de butée de guidage de l'arbre.

L'invention concerne également un procédé de protection contre une survitesse d'un arbre de turbine selon l'invention, comprenant une étape de rupture de la section fusible lorsque la valeur d'une contrainte tangentielle appliquée sur l'arbre dépasse une valeur seuil prédéterminée.

### Description des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est une demie-vue en coupe axiale d'une turbomachine selon l'état de la technique,
- la figure 2 est une demie-vue en coupe axiale d'une partie d'une turbomachine selon l'invention, et
- la figure 3 est une vue agrandie en coupe axiale d'une partie d'un arbre de turbine d'une turbomachine selon l'invention,
- la figure 4 est une vue en perspective d'un arbre de turbine d'une turbomachine selon un mode de réalisation de l'invention,
- la figure 5 est une vue de côté de l'arbre de turbine de la figure 4,
- la figure 6 est une vue de face de l'arbre de turbine de la figure 4, et
- la figure 7 est une demie-vue en coupe axiale de l'arbre de turbine de la figure 4.

### Description détaillée

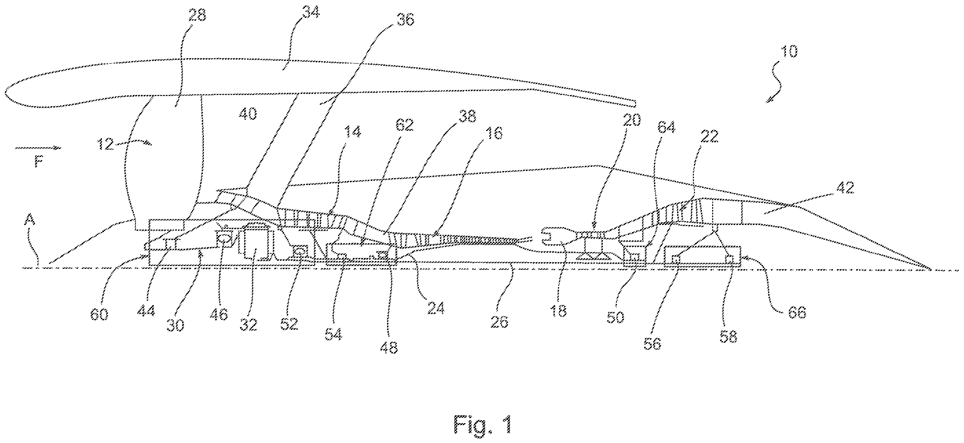

On a représenté à la figure 1 une turbomachine 10 d'aéronef, qui est ici un turboréacteur à double flux et à double corps. De manière connue, la turbomachine 10 comporte, d'amont en aval selon le sens d'écoulement des flux de gaz F dans la turbomachine, une soufflante 12, un compresseur basse pression 14, un compresseur haute pression 16, une chambre annulaire de combustion 18, une turbine haute pression 20 et une turbine basse pression 22.

Les rotors du compresseur haute pression 16 et de la turbine haute pression 20 sont reliés par un arbre haute pression 24 et forment avec lui un corps haute pression. Les rotors du compresseur basse pression 14 et de la turbine basse pression 22 sont reliés par un arbre basse pression 26 et forment avec lui un corps basse pression. Les arbres haute pression et basse pression s'étendent suivant un axe A longitudinal de la turbomachine 10.

La soufflante 12 comporte des pales 28 qui sont reliées à un arbre de soufflante 30. L'arbre de soufflante 30 peut être lié en rotation à l'arbre basse pression 26 par l'intermédiaire d'un réducteur 32, par exemple du type à train épicycloïdal.

La turbomachine 10 comprend également un carter de soufflante 34 qui s'étend autour des pales 28, qui est porté par des bras aérodynamiques 36, et qui définit une veine d'entrée d'air des flux F. Une partie de cet air pénètre dans une veine annulaire interne 38 d'écoulement d'un flux primaire et l'autre partie alimente une veine annulaire externe 40 d'écoulement d'un flux secondaire. La veine 38 traverse les compresseurs basse pression 14 et haute pression 16, la chambre de combustion 18, et les turbines haute pression 20 et basse pression 22. La veine externe 40 enveloppe des carters des compresseurs et des turbines et rejoint la veine interne 38 au niveau d'une tuyère 42 de la turbomachine 10.

Les arbres haute pression 24, basse pression 26 et de soufflante 30 sont centrés et guidés en rotation autour de l'axe A par des paliers, par exemple des paliers à roulement. L'arbre de soufflante 30 est ici supporté par un palier amont 44 et un palier aval 46. L'arbre haute pression 24 est supporté par un palier amont 48 et un palier aval 50, tandis que l'arbre basse pression 26 est supporté par quatre paliers 52, 54, 56 et 58.

Les paliers amont 48 et aval 50 de l'arbre haute pression 24 sont habituellement montés au moins en partie sur l'arbre haute pression.

Le premier palier 52 de l'arbre basse pression 26 est situé le plus en amont de l'arbre basse pression 26 et est monté sur l'arbre basse pression 26 et en aval du réducteur 32. Les deuxième, troisième et quatrième paliers 54, 56, 58 de l'arbre basse pression 26 sont montés au moins en partie sur l'arbre basse pression 26.

La turbomachine de la figure 1 comprend quatre enceintes 60, 62, 64 et 66, à savoir une enceinte 60 logeant les deux paliers de soufflante 44 et 46, le réducteur 32 et le palier basse pression 52, une enceinte 62 logeant le palier basse pression 54 et le palier haute pression amont 48, une enceinte 64 logeant le palier haute pression aval 50, et une enceinte 66 logeant les paliers basse pression 56 et 58.

Comme la vitesse de rotation de l'arbre haute pression 24 est élevée, ainsi que les contraintes transmises des rotors du compresseur haute pression 16 et de la turbine haute pression 20 aux stators du compresseur et de la turbine au moyen des paliers amont 48 et aval 50, ces paliers sont lubrifiés et refroidis, suite à l'échauffement des paliers dû aux frottements. De même, la vitesse de rotation de l'arbre basse pression 26 et les contraintes transmises des rotors du compresseur basse pression 14 et de la turbine basse pression 22 aux stators du compresseur et de la turbine au moyen des paliers 52, 54, 56 et 58 étant élevés, ces paliers sont lubrifiés et refroidis.

La lubrification des paliers est généralement réalisée avec de l'huile et s'effectue à l'intérieur des enceintes 60, 62, 64 et 66, afin de limiter la consommation d'huile de la turbomachine et de contenir l'huile pour éviter tout risque d'inflammation au sein de la turbomachine 10.

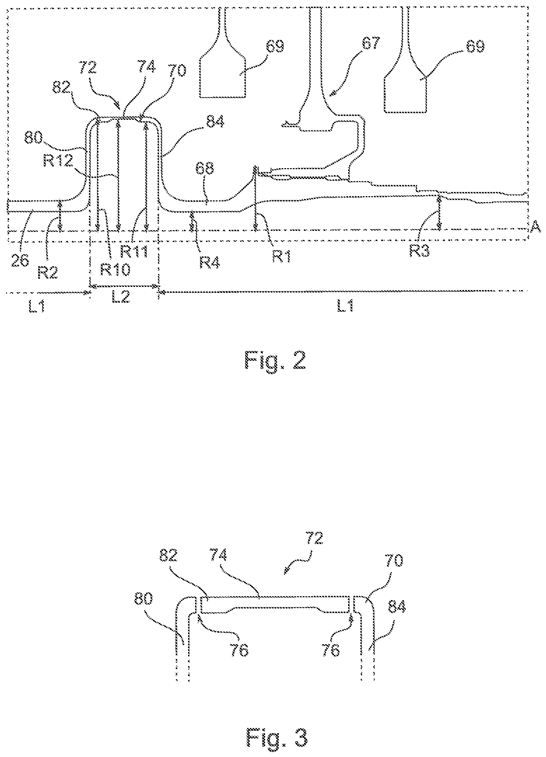

La figure 2 représente un arbre de turbine de la turbomachine 10, ici l'arbre basse pression 26, des moyens de liaison 67 entre l'arbre basse pression 26 et le rotor de la turbine (non représenté) et deux disques 69 du rotor de la turbine.

Conformément à l'invention, et comme représenté sur la figure 2, l'arbre basse pression 26 comprend une portion tubulaire principale 68 de longueur L1 et ayant un diamètre principal externe maximal donné.

L'arbre de turbine ayant une forme tubulaire, le diamètre principal externe correspond au diamètre extérieur de la portion tubulaire principale 68, et le diamètre principal interne correspond au diamètre intérieur de la portion tubulaire principale 68.

Le diamètre principal externe de la portion tubulaire principale 68 peut varier le long de l'axe A. On définit le diamètre principal externe maximal comme étant le diamètre extérieur de la portion tubulaire principale 68 le plus élevé le long de l'axe A. De même, on définit le diamètre principal externe minimal comme étant le diamètre extérieur de la portion tubulaire principale 68 le plus faible le long de l'axe A. Par exemple, sur la figure 2, le rayon principal externe maximal R1 et le rayon principal externe minimal R2 sont représentés.

Le diamètre principal interne de la portion tubulaire principale 68 peut varier le long de l'axe A. On définit le diamètre principal interne maximal comme étant le diamètre intérieur de la portion tubulaire principale 68 le plus élevé le long de l'axe A. De même, on définit le diamètre principal interne minimal comme étant le diamètre intérieur de la portion tubulaire principale 68 le plus faible le long de l'axe A. Par exemple, sur la figure 2, le rayon principal interne maximal R3 et le rayon principal interne minimal R4 sont représentés.

Autrement dit, l'épaisseur de la portion tubulaire principale 68, c'est-à-dire la différence entre le rayon principal externe et le rayon principal interne, peut varier le long de l'axe A.

L'arbre de turbine comprend également un tronçon tubulaire secondaire 70.

En particulier, l'arbre de turbine est monobloc, c'est-à-dire que la portion tubulaire principale 68 et le tronçon tubulaire secondaire 70 sont monolithiques.

Le tronçon tubulaire secondaire 70 a une longueur L2 et un diamètre secondaire externe maximal donné.

Le diamètre secondaire externe correspond au diamètre extérieur de la portion tubulaire secondaire 70, et le diamètre secondaire interne correspond au diamètre intérieur de la portion tubulaire secondaire 70.

Le diamètre secondaire externe de la portion tubulaire secondaire 70 peut varier le long de l'axe A. On définit le diamètre secondaire externe maximal comme étant le diamètre extérieur de la portion tubulaire secondaire 70 le plus élevé le long de l'axe A. De même, on définit le diamètre secondaire externe minimal comme étant le diamètre extérieur de la portion tubulaire secondaire 70 le plus faible le long de l'axe A. Par exemple, sur la figure 2, le rayon secondaire externe maximal R10 est représenté.

Le diamètre secondaire interne de la portion tubulaire secondaire 70 peut varier le long de l'axe A. On définit le diamètre secondaire interne maximal comme étant le diamètre intérieur de la portion tubulaire secondaire 70 le plus élevé le long de l'axe A. De même, on définit le diamètre secondaire interne minimal comme étant le diamètre intérieur de la portion tubulaire secondaire 70 le plus faible le long de l'axe A. Par exemple, sur la figure 2, le rayon secondaire interne minimal R11 est représenté.

Autrement dit, l'épaisseur de la portion tubulaire secondaire 70, c'est-à-dire la différence entre le rayon secondaire externe et le rayon secondaire interne, peut varier le long de l'axe A.

Le rayon secondaire externe maximal est supérieur au rayon principal externe maximal.

De préférence, le diamètre secondaire externe maximal est au moins 1,8 fois supérieur au diamètre principal externe maximal.

La longueur L2 peut être inférieure à la longueur L1, comme visible sur la figure 2. Autrement dit, le tronçon tubulaire secondaire 70 peut correspondre à une augmentation locale du diamètre de l'arbre par rapport au diamètre principal. Bien entendu, la longueur L2 peut être sensiblement égale à la longueur L1 ou supérieure à la longueur L1.

Avantageusement, le tronçon tubulaire secondaire 70, dont le diamètre secondaire externe maximal est supérieur au diamètre principal externe maximal de la portion tubulaire principale 68, s'étendant localement par rapport à la portion tubulaire principale 68 permet de limiter l'encombrement de l'arbre.

Le tronçon tubulaire secondaire 70 peut s'étendre, par exemple sur une extrémité de l'arbre, ou sensiblement au milieu de l'arbre. Plus généralement, le tronçon tubulaire secondaire 70 peut être agencé sur n'importe quelle partie de l'arbre.

Selon l'invention, le tronçon tubulaire secondaire 70 s'étend radialement en saillie de l'arbre 26, et donc de la portion tubulaire principale 70, de sorte que la portion tubulaire principale 68 s'étend de part et d'autre du tronçon tubulaire secondaire 70 selon l'axe A.

Autrement dit, le tronçon tubulaire secondaire 70 est agencé de sorte que de part et d'autre du tronçon tubulaire secondaire 70, le diamètre de l'arbre est inférieur au diamètre du tronçon tubulaire secondaire 70.

Ainsi, une partie de la portion tubulaire principale 68 s'étend d'un côté du tronçon tubulaire secondaire 70 et une autre partie de la portion tubulaire principale 68 s'étend de l'autre côté du tronçon tubulaire secondaire 70 selon l'axe A.

Comme représenté en figure 2, le tronçon tubulaire secondaire 70 présente une forme générale de « U ». Le tronçon tubulaire secondaire 70 comporte une première portion 80 s'étendant sensiblement radialement à l'axe A, suivie d'une deuxième portion 82 s'étendant sensiblement axialement, suivie d'une troisième portion 84 s'étendant sensiblement radialement à l'axe A. Ainsi, la deuxième portion 82 relie les première et troisième portions 80, 84.

La longueur de la deuxième portion 82 du tronçon tubulaire secondaire 70 est sensiblement égale à la longueur L2. La hauteur, c'est-à-dire la dimension radiale par rapport à l'axe A, des première et troisième portions 80, 84 du tronçon tubulaire secondaire 70 est sensiblement égale au rayon secondaire externe maximal R10.

Le tronçon tubulaire secondaire 70 comprend une section fusible 72 configurée pour rompre l'arbre 26 en deux parties distinctes lorsque la valeur d'une contrainte tangentielle appliquée sur l'arbre dépasse une valeur seuil prédéterminée. Autrement dit, la section fusible 72 est destinée à se rompre lorsque la valeur d'une contrainte tangentielle appliquée sur l'arbre est supérieure à une valeur seuil. Avantageusement, la section fusible 72 est configurée pour être la seule à rompre l'arbre 26 en deux parties distinctes lorsque la valeur d'une contrainte tangentielle appliquée sur l'arbre dépasse une valeur seuil prédéterminée.

La contrainte tangentielle dépend de la masse volumique et de la vitesse tangentielle de l'arbre. La vitesse tangentielle de l'arbre dépend du régime de rotation et du rayon externe de l'arbre.

Lorsque le rayon de l'arbre augmente, la valeur de la contrainte tangentielle augmente. De même, lorsque le régime de rotation de l'arbre augmente, la valeur de la contrainte tangentielle augmente.

La valeur de la contrainte tangentielle peut être déterminée en mesurant la vitesse tangentielle de l'arbre, puisque la masse volumique de ce dernier est une donnée physique déterminable ou donnée. Plus précisément, la valeur de la contrainte tangentielle peut être déterminée en mesurant le régime de rotation de l'arbre, puisque le rayon de ce dernier est une donnée physique déterminable ou donnée.

Une valeur seuil de la contrainte tangentielle peut être déterminée en fixant une vitesse tangentielle de l'arbre maximale à ne pas dépasser, c'est-à-dire en fixant un régime de rotation de l'arbre maximal à ne pas dépasser.

Avantageusement, la section fusible 72 agencée sur le tronçon tubulaire secondaire 70 de l'arbre, ayant un diamètre secondaire externe maximal supérieur au diamètre principal externe maximal, permet d'avoir la contrainte tangentielle qui génère la rupture de la section fusible 72, et non pas une contrainte de torsion due au couple.

Une contrainte de torsion, également appelée contrainte de cisaillement, dépend du couple, du rayon externe de l'arbre où la contrainte de torsion calculée et de l'inertie de l'arbre, l'inertie de l'arbre étant proportionnelle au diamètre de l'arbre.

Lorsque le rayon de la contrainte de torsion calculée augmente, l'inertie augmente, et la valeur de la contrainte de torsion diminue.

La portion tubulaire principale 68 de l'arbre est sensible au couple, mais peu sensible au régime de rotation. Autrement dit, la contrainte tangentielle est faible pour la portion tubulaire principale 68, tandis que la contrainte de cisaillement est élevée.

Le tronçon tubulaire secondaire 70 de l'arbre est sensible au régime de rotation, mais peu sensible au couple. Autrement dit, comme le tronçon tubulaire secondaire 70 présente un diamètre secondaire externe maximal supérieur au diamètre principal externe maximal, la contrainte tangentielle est élevée pour le tronçon tubulaire secondaire 70, tandis que la contrainte de cisaillement est faible.

La section fusible 72 peut être formée sur au moins un secteur angulaire du tronçon tubulaire secondaire 70. Autrement dit, seulement une partie du tronçon tubulaire secondaire 70 peut former la section fusible 72.

La section fusible 72 peut être formée sur une pluralité de secteurs angulaires, par exemple régulièrement répartis, autour de l'axe A.

La section fusible 72 peut être annulaire. Autrement dit, le tronçon tubulaire secondaire 70 peut comprendre, tout autour de l'axe A, la section fusible 72. Autrement dit, la totalité du tronçon tubulaire secondaire 70 peut former la section fusible 72.

La section fusible 72 peut comprendre une portion amincie 74. Une portion amincie 74 correspond à une portion de la section fusible 72, et donc du tronçon tubulaire secondaire 70, dont l'épaisseur, c'est-à-dire la distance entre le rayon secondaire externe et le rayon secondaire interne, est réduite par rapport au reste du tronçon tubulaire secondaire 70.

La portion amincie 74 peut s'étendre sur au plus 80 % de la longueur L2. De préférence, la portion amincie 74 s'étend sur au moins 50 % de la longueur L2.

De façon avantageuse, la portion amincie 74 s'étend sur au plus 80 % de la longueur L2 ce qui permet de ne pas fragiliser le tronçon tubulaire secondaire 70, tout en permettant d'avoir une section fusible sur ledit tronçon tubulaire secondaire configurée pour rompre l'arbre en deux parties distinctes lorsque la valeur de la contrainte tangentielle appliquée sur l'arbre dépasse une valeur seuil prédéterminée.

La portion amincie 74 peut être formée sur au moins un secteur angulaire de la section fusible 72, et donc du tronçon tubulaire secondaire 70. Autrement dit, seulement une partie de la section fusible 72 peut comprendre une portion amincie 74.

La portion amincie 74 peut être formée sur une pluralité de secteurs angulaires, par exemple régulièrement répartis, autour de l'axe A.

La portion amincie 74 peut être tubulaire. Autrement dit, la section fusible 72 peut comprendre, tout autour de l'axe A, une portion tubulaire amincie 74.

Le diamètre externe de la portion tubulaire amincie 74 peut varier le long de l'axe A. On définit le diamètre externe maximal de la portion tubulaire amincie 74 comme étant le diamètre extérieur de la portion tubulaire amincie 74 le plus élevé le long de l'axe A. De même, on définit le diamètre externe minimal de la portion tubulaire amincie 74 comme étant le diamètre extérieur de la portion tubulaire amincie 74 le plus faible le long de l'axe A. Par exemple, sur la figure 2, le rayon externe maximal de la portion tubulaire amincie 74 est égal au rayon secondaire externe maximal R10.

Le diamètre interne de la portion tubulaire amincie 74 peut varier le long de l'axe A. On définit le diamètre interne maximal de la portion tubulaire amincie 74 comme étant le diamètre intérieur de la portion tubulaire amincie 74 le plus élevé le long de l'axe A. De même, on définit le diamètre interne minimal de la portion tubulaire amincie 74 comme étant le diamètre intérieur de la portion tubulaire amincie 74 le plus faible le long de l'axe A. Par exemple, sur la figure 2, le rayon interne maximal R12 de la portion tubulaire amincie 74 est représenté, et est égal au rayon secondaire interne maximal.

En particulier, le diamètre interne maximal de la portion tubulaire amincie 74 peut être supérieur au diamètre secondaire interne minimal. Autrement dit, le diamètre interne maximal de la portion tubulaire amincie 74 peut être supérieur au diamètre interne minimal du tronçon tubulaire secondaire 68, en dehors de la portion tubulaire amincie.

Le diamètre externe maximal de la portion tubulaire amincie 74 peut être égal au diamètre secondaire externe maximal. Autrement dit, le diamètre externe maximal de la portion tubulaire amincie 74 et le diamètre externe minimal du tronçon tubulaire secondaire 68, peuvent être égaux.

La longueur L2 peut être supérieure à 0,3 fois le diamètre externe maximal de la portion tubulaire amincie 74.

Comme représenté sur la figure 3, le tronçon tubulaire secondaire 70 peut comprendre un ou une pluralité d'orifices traversant 76. Par exemple, deux orifices traversant 76 agencés de part et d'autre de la portion amincie 74 sont représentés sur la figure 3.

Les orifices traversant 76 peuvent être formés sur un secteur angulaire du tronçon tubulaire secondaire 70 autour de l'axe A, ou être régulièrement répartis sur le tronçon tubulaire secondaire 70 par rapport à l'axe A.

Un orifice traversant 76 peut être formé dans la section fusible 72, et plus précisément dans la portion amincie 74.

Un orifice traversant 76 peut présenter toute forme de section, et notamment une section circulaire, ovale ou polygonale.

De façon avantageuse, au moins un orifice traversant 76 formé dans le tronçon tubulaire secondaire 70 permet à la section fusible 72 de décorréler les contraintes de torsion et tangentielle. Autrement dit, la présence d'un orifice traversant dans le tronçon tubulaire secondaire permet de favoriser la rupture de l'arbre pour une vitesse élevée, plutôt que pour un couple élevé.

Un orifice traversant 76 permet en outre une évacuation de l'huile ayant pu s'accumuler en cas de fuite dans une enceinte 60, 62, 66 lubrifiée s'étendant autour de l'arbre.

Le tronçon tubulaire secondaire 70 peut être agencé en aval d'un palier de butée de guidage de l'arbre. Par exemple, le tronçon tubulaire secondaire 70 peut être agencé en aval du palier 56 de l'arbre basse pression 26.

Avantageusement, en cas de départ en survitesse résultant de la rupture de l'arbre, ici l'arbre basse pression, en aval du palier 56, la section fusible 72 permet de faire reculer le rotor de la turbine basse pression 22, qui permet de venir casser les aubes dudit rotor, par exemple via un bombé des aubes de stator de la turbine basse pression 22, et par conséquent de ralentir ledit rotor.

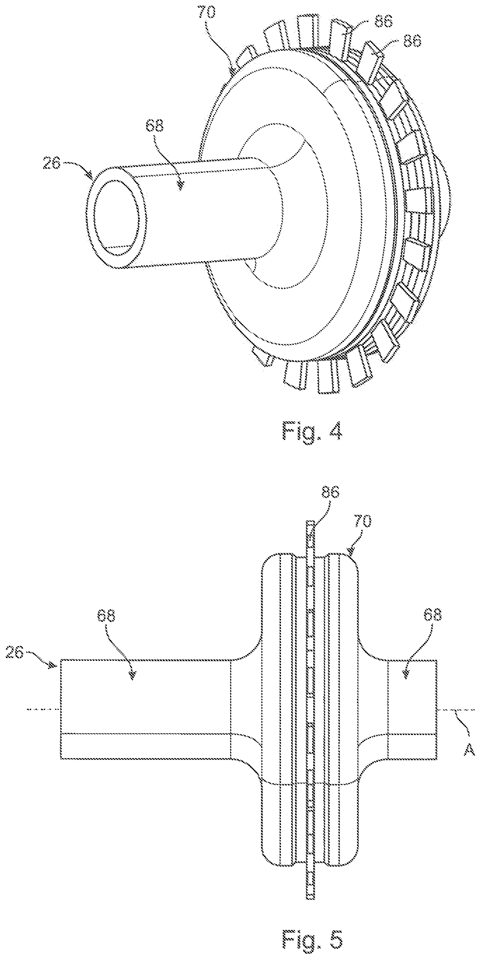

Les figures 4 à 7 représentent un mode de réalisation de l'arbre basse pression 26. Ce mode de réalisation peut reprendre toutes les caractéristiques des figures 1 à 3.

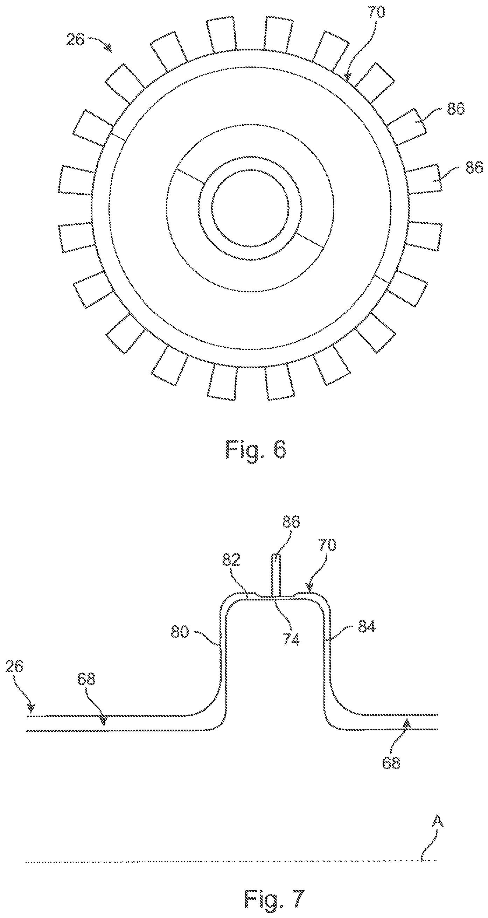

Sur la figure 7, le rayon externe maximal de la portion amincie 74 est inférieur au rayon secondaire externe maximal R10 et le rayon interne maximal de la portion amincie 74 est égal au rayon secondaire interne minimal R11.

De plus, le tronçon tubulaire secondaire 70, et plus précisément la portion amincie 74 de la section fusible 72, peut comprendre une ou une pluralité de dents 86 s'étendant radialement en saillie de la portion amincie 74.

La pluralité de dents 86 peut être formée sur au moins un secteur angulaire autour de l'axe A, ou sur une pluralité de secteurs angulaires, par exemple régulièrement répartis, autour de l'axe A, ou tout autour de l'axe A.

Les dents 86 peuvent être agencées sensiblement au milieu de la portion amincie 74.

Une dent 86 peut être de forme générale parallélépipédique, comme représenté sur les figures 4 à 7.

Une dent 86 peut s'étendre sensiblement radialement vis-à-vis de l'axe A, comme représenté sur la figure 7.

Les dents 86 peuvent être espacées les unes des autres de sorte que les dents 86 sont régulièrement réparties sur la portion amincie 74. En variante, les dents 86 peuvent être réparties de manière irrégulière sur la portion amincie 74.

Les dents 86 permettent d'augmenter localement le rayon de la portion amincie 74, ce qui permet, lors d'un départ en survitesse, par la force centrifuge, de pouvoir arracher la portion amincie 74, et donc de rompre la section fusible 72.

L'invention concerne également un procédé de protection contre une survitesse d'un arbre de turbine tel que décrit précédemment.

Le procédé comprend une étape de rupture de la section fusible 72 lorsque la valeur d'une contrainte tangentielle appliquée sur l'arbre dépasse une valeur seuil prédéterminée. Autrement dit, le procédé comprend une étape de rupture de l'arbre de turbine en deux parties distinctes lorsque la valeur d'une contrainte tangentielle appliquée sur l'arbre dépasse une valeur seuil prédéterminée.

Cette étape de rupture permet de façon avantageuse d'avoir la contrainte tangentielle qui génère la rupture de la section fusible, et non pas la contrainte de torsion due au couple. Ceci permet avantageusement une rupture de la section fusible pour une vitesse élevée, et non pas pour un couple élevé.

## Revendications

1. Arbre (26) de turbine d'une turbomachine s'étendant selon un axe longitudinal (A), comprenant une portion tubulaire principale (68) de longueur L1 et ayant un diamètre principal externe maximal donné, et comprenant un tronçon tubulaire secondaire (70) de longueur L2 et ayant un diamètre secondaire externe maximal supérieur au diamètre principal externe maximal, le tronçon tubulaire secondaire (70) comprenant une section fusible (72) configurée pour rompre l'arbre en deux parties distinctes lorsque la valeur d'une contrainte tangentielle appliquée sur l'arbre dépasse une valeur seuil prédéterminée, l'arbre étant **caractérisé en ce que** le tronçon tubulaire secondaire (70) s'étend radialement en saillie de l'arbre (26) de sorte que la portion tubulaire principale (68) s'étend de part et d'autre du tronçon tubulaire secondaire (70) selon l'axe longitudinal (A).

2. Arbre (26) de turbine selon la revendication 1, dans lequel le diamètre secondaire externe maximal est au moins 1,8 fois supérieur au diamètre principal externe maximal.

3. Arbre (26) de turbine selon l'une des revendications précédentes, dans lequel la section fusible (72) comprend une portion amincie (74) dont le diamètre interne maximal est supérieur à un diamètre secondaire interne minimal dudit tronçon tubulaire secondaire (70), et dont le diamètre externe maximal est égal au diamètre secondaire externe maximal.

4. Arbre (26) de turbine selon la revendication 3, dans lequel la longueur L2 est supérieure à 0,3 fois le diamètre externe maximal de la portion amincie (74).

5. Arbre (26) de turbine selon l'une des revendications 3 ou 4, dans lequel la portion amincie (74) s'étend sur au plus 80 % de la longueur L2.

6. Arbre (26) de turbine selon l'une des revendications 3 à 5, dans lequel la portion amincie (74) comprend au moins une dent (86) qui s'étend radialement en saillie de la portion amincie (74).

7. Arbre (26) de turbine selon la revendication 6, dans lequel la portion amincie (74) comprend une pluralité de dents (86) qui s'étendent radialement en saillie de la portion amincie (74), la pluralité de dents (86) étant régulièrement répartie sur la portion amincie (74).

8. Arbre (26) de turbine selon l'une des revendications précédentes, dans lequel au moins un orifice traversant (76) est formé dans le tronçon tubulaire secondaire (70).

9. Arbre (26) de turbine selon l'une des revendications précédentes, dans lequel la section fusible (72) est formée sur au moins un secteur angulaire du tronçon tubulaire secondaire (70).

10. Turbomachine (10), en particulier d'aéronef, comprenant une turbine (22) comportant un arbre (26) de turbine selon l'une des revendications précédentes, le tronçon tubulaire secondaire (70) étant agencé en aval d'un palier (56) de butée de guidage de l'arbre.

11. Procédé de protection contre une survitesse d'un arbre (26) de turbine d'une turbomachine (10) selon l'une des revendications 1 à 9, comprenant une étape de rupture de la section fusible (72) lorsque la valeur d'une contrainte tangentielle appliquée sur l'arbre dépasse une valeur seuil prédéterminée.

## Patentansprüche

1. Turbinenwelle (26) einer Turbomaschine, die sich entlang einer Längsachse (A) erstreckt, mit einem rohrförmigen Hauptabschnitt (68) der Länge L1, der einen gegebenen maximalen äußeren Hauptdurchmesser umfasst, und mit einem rohrförmigen Sekundärabschnitt (70) der Länge L2, der einen maximalen äußeren Sekundärdurchmesser umfasst, der größer ist als der maximale äußere Hauptdurchmesser, wobei der rohrförmige Sekundärabschnitt (70) einen Sollbruchbereich (72) umfasst, der so konfiguriert ist, dass er die Welle in zwei Einzelteile zerbricht, wenn der Wert einer tangentialen Spannung, die auf die Welle ausgeübt wird, einen vorbestimmten Schwellenwert übersteigt, wobei die Welle **dadurch gekennzeichnet ist, dass** sich der rohrförmige Sekundärabschnitt (70) radial von der Welle (26) vorragt, so dass sich der rohrförmige Hauptabschnitt (68) zu beiden Seiten des rohrförmigen Sekundärabschnitts (70) entlang der Längsachse (A) erstreckt.

2. Turbinenwelle (26) nach Anspruch 1, wobei der maximale äußere Sekundärdurchmesser mindestens 1,8 mal so groß ist wie der maximale äußere Hauptdurchmesser.

3. Turbinenwelle (26) nach einem der vorhergehenden Ansprüche, wobei der Sollbruchbereich (72) einen dünnen gemachten Abschnitt (74) umfasst, dessen maximaler Innendurchmesser größer ist als ein minimaler innerer Sekundärdurchmesser des rohrförmigen Sekundärabschnitts (70), und dessen maximaler Außendurchmesser gleich dem maximalen äußeren Sekundärdurchmesser ist.

4. Turbinenwelle (26) nach Anspruch 3, wobei die Länge L2 größer ist als 0,3 mal der maximale Außendurchmesser des sich dünnen gemachten Abschnitts (74).

5. Turbinenwelle (26) nach einem der Ansprüche 3 oder 4, wobei sich der sich dünnen gemachten Abschnitt (74) über höchstens 80 % der Länge L2 erstreckt.

6. Turbinenwelle (26) nach einem der Ansprüche 3 bis 5, wobei der sich dünnen gemachten Abschnitt (74) mindestens einen Zahn (86) umfasst, der sich radial von dem sich dünnen gemachten Abschnitt (74) vorragt erstreckt.

7. Turbinenwelle (26) nach Anspruch 6, wobei der sich verjüngende Abschnitt (74) eine Vielzahl von Zähnen (86) umfasst, die sich radial von dem sich dünnen gemachten Abschnitt (74) vorragt erstrecken, wobei die Vielzahl von Zähnen (86) gleichmäßig über den sich dünnen gemachten Abschnitt (74) verteilt ist.

8. Turbinenwelle (26) nach einem der vorhergehenden Ansprüche, wobei in dem rohrförmigen Sekundärabschnitt (70) mindestens ein Durchgangsloch (76) ausgebildet ist.

9. Turbinenwelle (26) nach einem der vorhergehenden Ansprüche, wobei der Sollbruchbereich (72) an mindestens einem Winkelsegment des rohrförmigen Sekundärbereichs (70) ausgebildet ist.

10. Turbomaschine (10), insbesondere Luftfahrzeug-Turbomaschine, mit einer Turbine (22), die eine Turbinenwelle (26) nach einem der vorhergehenden Ansprüche umfasst, wobei der rohrförmige Sekundärabschnitt (70) hinter einem wellenführenden Drucklager (56) angeordnet ist.

11. Verfahren zum Schutz einer Turbinenwelle (26) einer Turbomaschine (10) gegen Überdrehzahl nach einem der Ansprüche 1 bis 9, mit einem Schritt zum Brechen des Sollbruchbereichs (72), wenn der Wert einer auf die Welle ausgeübten tangentialen Spannung einen vorbestimmten Schwellenwert überschreitet.

## Claims

1. A turbine shaft (26) of a turbomachine extending along a longitudinal axis (A), comprising a main tubular portion (68) of length L1 and having a given maximum outer main diameter, comprising a secondary tubular segment (70) of length L2 and having a maximum outer secondary diameter larger than the maximum outer main diameter, the secondary tubular segment (70) comprising a weak section (72) configured to break the shaft into two distinct parts when the value of a tangential stress applied to the shaft exceeds a predetermined threshold value, the turbine shaft being **characterised in that** the secondary tubular segment (70) extending radially projecting from the shaft (26) such that the main tubular portion (68) extends on either side of the secondary tubular segment (70) along the longitudinal axis (A).

2. The turbine shaft (26) according to claim 1, wherein the maximum outer secondary diameter is at least 1.8 times larger than the maximum outer main diameter.

3. The turbine shaft (26) according to any one of the preceding claims, wherein the weak section (72) comprises a thinned portion (74) whose maximum inner diameter is larger than a minimum inner secondary diameter of said secondary tubular segment (70), and whose maximum outer diameter is equal to the maximum outer secondary diameter.

4. The turbine shaft (26) according to claim 3, wherein the length L2 is greater than 0.3 times the maximum outer diameter of the thinned portion (74).

5. The turbine shaft (26) according to any one of the claims 3 or 4, wherein the thinned portion (74) extends over not more than 80% of the length L2.

6. The turbine shaft (26) according to any one of the claims 3 to 5, wherein the thinned portion (74) comprises at least one tooth (86) which extends radially projecting from the thinned portion (74).

7. The turbine shaft (26) according to claim 6, wherein the thinned portion (74) comprises a plurality of teeth (86) that extend radially projecting from the thinned portion (74), the plurality of teeth (86) being evenly distributed over the thinned portion (74).

8. The turbine shaft (26) according to any one of the preceding claims, wherein at least one through-hole (76) is formed in the secondary tubular segment (70).

9. The turbine shaft (26) according to any one of the preceding claims, wherein the weak section (72) is formed on at least one angular sector of the secondary tubular segment (70).

10. A turbomachine (10), in particular for an aircraft, comprising a turbine (22) comprising a turbine shaft (26) according to any one of the preceding claims, the secondary tubular segment (70) being arranged downstream of a thrust bearing (56) for guiding the shaft.

11. A method for protecting against overspeed of a turbine shaft (26) of a turbomachine (10) according to any one of the claims 1 to 9, the method comprising a step of breaking the weak section (72) when the value of a tangential stress applied to the shaft exceeds a predetermined threshold value.
